# EUROPEAN PATENT APPLICATION

(11) **EP 4 617 386 A1**
(43) Date of publication of application: **17.09.2025**
(21) Application number: 23911246.9
(22) Date of filing: 14.08.2023
(51) Int. Cl.: C21C 5/52, C21C 7/00, F27B 3/08, F27B 3/28, F27D 11/08, F27D 21/00

(54) **ENERGIZATION STATE DETERMINATION DEVICE FOR ELECTRIC ARC FURNACE, OPERATING METHOD FOR ELECTRIC ARC FURNACE, AND ELECTRIC ARC FURNACE**

(30) Priority: 27.12.2022 JP 2022209300
(71) Applicant: JFE Steel Corporation, Tokyo 100-0011 (JP)
(72) Inventor: ODA, Nobuhiko, Tokyo 100-0011 (JP)
(74) Representative: Haseltine Lake Kempner LLP
(86) International application number: PCT/JP2023/029431
(87) International publication number: WO 2024/142462

(57) **Abstract**

Provided is a technology capable of promptly determining the energization condition in an electric arc furnace, and stably determining the furnace condition without the influence of dust. Specifically, provided is an apparatus for determining the energized state of an electric arc furnace, including a detection means for detecting sound generated within the electric arc furnace, an output means for analyzing a frequency of the detected sound, and outputting a frequency-sound pressure signal, and a determination means for determining a covered state of an arc due to slag foaming based on a signal intensity of sound detected at one or more frequencies or within a predetermined frequency range, both selected from 500 Hz or more but 1500 Hz or less. Also provided is a method for producing molten steel by melting and refining scrap with an electric arc furnace by controlling one or more of a combination of an oxygen-containing gas supply rate, a carbon material supply amount, and a slag forming agent supply amount, based on the energized state determined with the apparatus.

## Description

### Technical Field

The present invention relates to an apparatus for determining the energized state of an electric arc furnace from sound generated within the furnace, an operation method for an electric arc furnace using the apparatus, and an electric arc furnace including the apparatus.

### Background Art

An electric arc furnace conducts heating and melting of a charging material in the furnace using an arc generated between an electrode and the charging material. The temperature of an arc is typically over 2000°C, resulting in a significant heat loss due to radiation. To mitigate this heat loss due to radiation, causing slag foaming is known to be effective for shielding the arc light. Therefore, detecting slag foaming in the furnace is crucial to increase energization efficiency. In addition, slag foaming has the effect of reducing the entrainment of the atmosphere in molten steel, which can also suppress the nitrogen absorption reaction of the molten steel. Accordingly, it is important to maintain the slag foaming state to produce high-grade molten steel.

In view of this background, various techniques for detecting a foaming state in an electric furnace have been studied. Patent Literature 1 discloses a method of detecting a foaming state in a driven electric furnace by monitoring the NOx concentration in an exhaust gas. In addition, Patent Literature 2 discloses a method of directly monitoring the slag level in a furnace using microwaves. Further, Patent Literature 3 discloses a method of indirectly estimating a foaming state by measuring the vibration or sound of a furnace body.

### Citation List

### Patent Literature

Patent Literature 1: JP-A-H10-226812
Patent Literature 2: JP-A-H07-166222
Patent Literature 3: JP-A-2013-170748

### Summary of Invention

### Technical Problem

However, the conventional techniques have the following problems.

The method described in Patent Literature 1 uses a component in the exhaust gas for the determination. Therefore it takes time to detect the exhaust gas component from the moment the energization condition in the furnace has changed, making it difficult to control slag foaming in real-time.

According to the method described in Patent Literature 2, when a large amount of dust is produced in a furnace, noise is superimposed on the signal, making it difficult to detect the foaming condition stably.

The method described in Patent Literature 3 allows relatively rapid detection of the foaming condition and is less susceptible to interference from dust and other factors within the furnace. However, when measuring frequencies of 500 Hz or lower, external sound from a plant other than the arc sound has a significant influence, making it difficult to determine the furnace condition stably.

Having been made in view of the circumstances, the present invention aims to provide an apparatus for determining the energized state of an electric arc furnace, which can promptly determine the energization condition in the furnace and stably determine the furnace condition without the influence of dust, an operation method for an electric arc furnace, and an electric arc furnace.

### Solution to Problem

To address the above object, the inventors conducted concentrated studies by focusing on the fact that dielectric breakdown sound with a frequency as high as approximately 1000 Hz is generated when a foaming state is not maintained and the energization condition thus deteriorates. As a result, the present invention was accomplished.

An apparatus for determining an energized state of an electric arc furnace according to the present invention that advantageously solves the above problems includes: a detection means for detecting sound generated within the electric arc furnace; an output means for analyzing a frequency of the detected sound, and outputting a frequency-sound pressure signal; and a determination means for determining a covered state of an arc due to slag foaming based on a signal intensity of sound detected at one or more frequencies or within a predetermined frequency range, both selected from 500 Hz or more but 1500 Hz or less.

Note that the apparatus for determining an energized state of an electric arc furnace according to the present invention may include the following features, for example, that are considered to be more preferable solution means.
(a) The determination means determines a slag foaming state in the furnace based on the sum or mean of signal intensities of sound detected either within a specified frequency range or at a plurality of frequencies, both selected from 500 Hz or more but 1500 Hz or less.
(b) The determination means determines a slag foaming state in the furnace by excluding a time during which a main raw material and auxiliary material are charged into the electric arc furnace.

An operation method for an electric arc furnace according to the present invention, which advantageously addresses the above problems, includes, when producing molten steel by melting and refining scrap in an electric arc furnace, controlling one or more of a combination of an oxygen-containing gas supply rate, a carbon material supply amount, and a slag forming agent supply amount, based on the energized state determined by any of the apparatuses described above.

An electric arc furnace according to the present invention that advantageously addresses the above problems includes any of the apparatuses described above.

### Advantageous Effects of Invention

An apparatus for determining the energized state of an electric arc furnace, an operation method for an electric arc furnace, and an electric arc furnace according to the present invention can achieve prompt determination of the energization condition in the furnace and stable determination of the furnace condition without the influence of dust. This makes it possible to reduce the electric power unit consumption of the electric arc furnace, which is industrially advantageous.

### Brief Description of Drawings

[Fig. 1] Fig. 1 is a graph illustrating fluctuation in sound pressure at 875 Hz when dielectric breakdown occurs in an electric arc furnace according to an embodiment of the present invention?
[Fig. 2] Fig. 2 is a graph illustrating fluctuation in sound pressure at 875 Hz when a main raw material is charged into the electric arc furnace according to the foregoing embodiment.
[Fig. 3] Fig. 3 is a graph illustrating the relationship between the abnormal sound detection time ratio for which the mean of predetermined sound pressure is 1 Pa or more and the index of the electric power unit consumption in the electric arc furnace of the foregoing embodiment.

### Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

An apparatus for determining the energized state of an electric arc furnace according to the present embodiment (hereinafter referred to as the "present apparatus") includes a sound-collecting microphone as a detection means for detecting sound generated within the electric arc furnace. An AC type or DC type electric arc furnace can be used as the electric arc furnace. The present apparatus also includes an output means for analyzing the frequency of the detected sound and outputting a frequency-intensity signal. This function can be achieved by hardware, such as a computer, or software. The microphone may be placed anywhere within the range where sound is audible in the electric furnace. Thus, the microphone need not be placed near the electric furnace at a high temperature. **In** addition, the present apparatus also includes a determination means. This function can also be achieved by hardware, such as a computer, or software.

Firstly, to eliminate the influence of sound not related to foaming produced in a building, the frequency to be measured is set to a predetermined frequency value or in a predetermined frequency width, both within the range of 500 Hz or more but 1500 Hz or less. Then, the measured sound may be subjected to Fourier transform, or filtered with a low-pass filter and a high-pass filter. When Fourier transform is applied, it is possible to use the sum or the mean of signal values of a plurality of frequencies of 500 Hz or more but 1500 Hz or less. In addition, by excluding the time during which a main raw material and auxiliary material are charged into the furnace in the determination, the furnace condition can be determined more stably.

Detailed description will be made hereinafter.

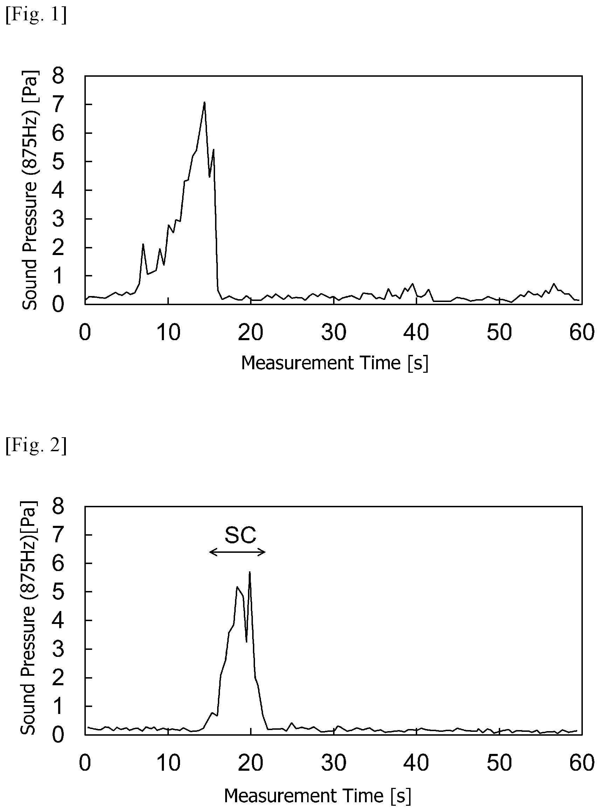

Before developing the present invention, the present inventors measured the frequency of dielectric breakdown sound generated under a degraded energized state with unstable foaming. As a result, it was observed that the dielectric breakdown sound occurred within the range of 500 Hz to 1500 Hz. It was also observed that sound with frequencies above 1500 Hz decays significantly, making them difficult to measure reliably. Accordingly, it is possible to determine the furnace condition by using the sum of the values of electric signals derived from sound pressure at one or more frequencies within the range of 500 Hz or more to 1500 Hz or less. In particular, since the frequency of the dielectric breakdown sound is predominantly concentrated between 800 Hz and 1000 Hz, it is preferable to set some of the frequencies to be measured between 800 Hz and 1000 Hz. Fig. 1 illustrates the fluctuation in sound pressure at 875 Hz when dielectric breakdown sound is generated. It also illustrates that the sound pressure value is high when the dielectric breakdown sound occurs. For example, by setting a sound pressure of 1 Pa as a threshold, dielectric breakdown sound can be detected. This threshold varies depending on the level of the input or the position of the microphone disposed.

Meanwhile, the frequency of the charging sound generated in the charging of a main raw material and auxiliary material into the furnace was measured to be approximately 1000 Hz. This frequency varies depending on the type and size of material charged into the furnace, generating sound with a wide frequency range. Therefore, it is difficult to separate the charging sound from the dielectric breakdown sound by frequency analysis alone. Fig. 2 shows the sound pressure at 875Hz when scrap as a main raw material is charged. However, as the charging time is either predetermined or manually determined, it can be easily identified. For example, in Fig. 2, the main raw material was charged into the furnace during the time period indicated by SC. Therefore, it is possible to enhance the accuracy of the furnace condition determination by excluding the time intervals when only the charging sound is generated.

### Example

The inventors conducted electric melting using an electric arc furnace with a tapping capacity of 150 t to assess the effect of the present embodiment. The electric furnace used in the present embodiment includes a water-cooled oxygen lance and a carbon injection lance, through which oxygen and carbon material respectively can be blown into the furnace.

The operation pattern involves the following steps. First, an iron source and auxiliary material are charged into the furnace. The electric furnace used in the present embodiment is operated with approximately 80 t of molten steel left therein for the next charge, and the iron source and auxiliary material are charged into the molten steel. Examples of the iron source include scrap, pig iron, and reduced iron. Examples of the auxiliary material include a carburization material, an MgO source to protect refractories, and lime to adjust the composition of slag. After or while the raw material is charged into the furnace, the furnace starts to be energized, and oxygen and carbon are then blown into the furnace. After that, the iron source is sequentially supplied, and when the amount of molten steel in the furnace has reached approximately 230 t, the temperature of the molten steel is adjusted to approximately 1600°C, followed by tapping the molten steel. The target tapping weight is set to 150 t, and the operation continues to the next charge with approximately 80 t of molten steel left in the furnace.

A sound-collecting microphone was disposed in the same building as the electric furnace. The microphone was positioned approximately 10 m away from the electric furnace. Acoustic data measured with the microphone were subjected to Fourier transform using an FTT analyzer and decomposed into sound pressure by frequency. The frequency width was set to 25 Hz, and the mean of sound pressures at 850 Hz, 875 Hz, and 900 Hz was output to a monitor in a control room for the electric furnace. Sound with such a frequency was determined as abnormal sound. The oxygen supply rate, the carbon material blowing rate, and the slag forming agent supply rate were adjusted through trial and error while monitoring the abnormal sound so that the sound pressure value did not exceed 1 Pa. Lime was used as the slag forming agent. Note that sound with the same frequency as the abnormal sound occurs during the charging of the iron source into the electric furnace. During this period, this sound was not identified as the abnormal sound and was excluded from the above adjustment target.

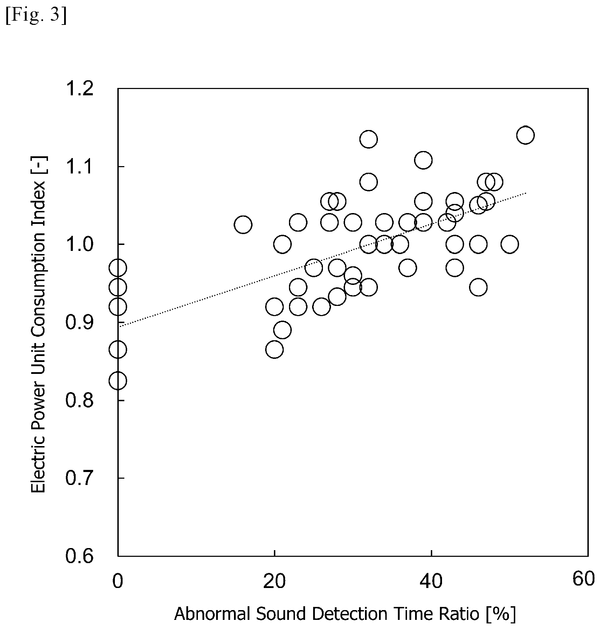

Fig. 3 illustrates the relationship between the index of the electric power unit consumption and the abnormal sound detection time ratio (%), where the abnormal sound detection time ratio is defined as the ratio of the time obtained by excluding the iron source charging time from the time during which the sound pressure of the abnormal sound is above 1 Pa, with respect to the energization time during operation. The electric power unit consumption is represented as an index, with the mean of all data set at 1.0. The lower the abnormal sound detection time ratio, the lower the electric power unit consumption. By operating the furnace while monitoring the abnormal sound in this manner, the energization efficiency was enhanced, and the electric power unit consumption was reduced. This improvement was attributed to the ability to maintain the slag foaming state during energization, which effectively shielded radiation heat from the arc with the slag.

Note that, in this specification, "t" that is the unit of a mass represents 10³ kg.

### Industrial Applicability

Molten iron, which is produced with the electric arc furnace and the operation method therefor according to the present invention, is less likely to absorb nitrogen. Therefore, the operation method is also advantageous as a method for obtaining high-purity molten iron. In addition, the electric arc furnace and the operation method therefor according to the present invention can reduce the possibility of unexpected arc conduction to the furnace wall, which is formed of a refractory and a water-cooled panel, which can contribute to increasing the service life of the furnace body.

## Claims

1. An apparatus for determining an energized state of an electric arc furnace, comprising:
a detection means for detecting sound generated within the electric arc furnace;
an output means for analyzing a frequency of the detected sound, and outputting a frequency-sound pressure signal; and
a determination means for determining a covered state of an arc due to slag foaming based on a signal intensity of sound detected at one or more frequencies or within a predetermined frequency range, both selected from 500 Hz or more but 1500 Hz or less.

2. The apparatus for determining an energized state of an electric arc furnace according to claim 1, wherein
the determination means determines a slag foaming state in the furnace based on the sum or mean of signal intensities of sound detected either within a specified frequency range or at a plurality of frequencies, both selected from 500 Hz or more but 1500 Hz or less.

3. The apparatus for determining an energized state of an electric arc furnace according to claim 1, wherein
the determination means determines a slag foaming state in the furnace by excluding a time during which a main raw material and auxiliary material are charged into the electric arc furnace.

4. An operation method for an electric arc furnace, comprising, when producing molten steel by melting and refining scrap in an electric arc furnace, controlling one or more of a combination of an oxygen-containing gas supply rate, a carbon material supply amount, and a slag forming agent supply amount, based on an energized state determined with the apparatus according to any one of claims 1 to 3.

5. An electric arc furnace comprising the apparatus according to any one of claims 1 to 3.
